(19) Europäisches Patentamt
European Patent Office
Office européen des brevets

(11) **EP 1 826 587 A2**

(12) **EUROPEAN PATENT APPLICATION**

(43) Date of publication:
**29.08.2007 Bulletin 2007/35**

(51) Int Cl.:
***G01S 15/89*** *(2006.01)*

(21) Application number: **07003438.4**

(22) Date of filing: **19.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.02.2006 JP 2006046799**

(71) Applicants:
• **KABUSHIKI KAISHA TOSHIBA**
**Tokyo (JP)**

• **Toshiba Medical Systems Corporation**
**Otawara-shi,**
**Tochigi-ken (JP)**

(72) Inventor: **Sato, Takeshi**
**Otawara-shi**
**Tochigi (JP)**

(74) Representative: **Kramer - Barske - Schmidtchen**
**Radeckestrasse 43**
**81245 München (DE)**

(54) **Ultrasonic diagnostic apparatus and ultrasonic diagnostic method**

(57) An ultrasonic diagnostic apparatus has a scanning executing unit, a Doppler signal obtaining unit, a storage unit, a removing unit, a blood flow information obtaining unit, and a B-mode image generating unit. The scanning executing unit executes a first scanning that is iteratively performed by a predetermined period so as to obtain a B-mode image of an object and executes a second scanning that is iteratively performed a predetermined number of times by a first period between the first scanning so as to obtain a two-dimensional distribution of a blood flow information and that is iteratively performed by a second period while inserting the first scanning. The Doppler signal obtaining unit sequentially obtains a Doppler signal from a reflection signal obtained by the second scanning. The storage unit stores, for each raster direction, a Doppler signal string at unequal time intervals collected for the first period and the second period by the Doppler signal obtaining unit. The removing unit obtains a blood flow signal by reading the Doppler signal string at the unequal time intervals from the storage unit and removes a signal component with a small motion. The blood flow information obtaining unit obtains the blood flow information based on the blood flow signal. The B-mode image generating unit generates the B-mode image based on the reflection signal obtained by the first scanning.

FIG. 2

Printed by Jouve, 75001 PARIS (FR)

**Description**

BACKGROUND OF THE INVENTION

1. Field of the Invention

The present invention relates to an ultrasonic diagnostic apparatus and an ultrasonic diagnostic method that two-dimensionally visualizes a blood flow with a Doppler signal obtained by receiving and sending ultrasonic waves.

2. Description of the Related Art

In diagnosis using an ultrasonic diagnostic apparatus, a method for detecting a blood flow velocity by using a Doppler effect of ultrasonic waves and displaying a blood flow with colors is called a color Doppler method. In a conventional color Doppler ultrasonic diagnostic apparatus having a blood flow display function according to the color Doppler method, ultrasonic waves are received and sent in the same direction plural times. A data string of the ultrasonic waves received and sent in the same direction is called a packet.

By increasing the packet size of the data string of the ultrasonic waves, the detection sensitivity of the blood flow can be improved. However, since a frame rate is thus reduced, the packet size is usually 4 to 16. The increase in packet size of the data string improves the detection sensitivity of the blood flow because of the following reasons.

That is, first, the presence or absence of the blood flow is determined by setting a threshold to a power signal of the blood flow extracted from a received ultrasonic Doppler signal. The received ultrasonic Doppler signal is sent to a moving target indication (MTI) filter (wall filter) for removing a clutter component from the organ and extracting a blood flow signal and a power value of an output signal from the MTI filter is added, thereby obtaining the power signal value of the blood flow. Therefore, as the packet size is larger and the number of power signals of the blood flow as an addition target is larger, a signal to noise (S/N) ratio is improved.

Secondly, the MIT filter as a type of finite impulse response (FIR) depends on the number of pieces of input data. As the number of pieces of the input data is larger, a highpass filter can be formed with a lower cut-off frequency and sharp roll-off characteristics can be formed. Even in the case of the MTI filter as a type of infinite impulse response (IIR), when a data string having a finite length is used, the MTI filter as the type of IIR can be converted into the MIT filter as the type of FIR an FIR filter without fail. Therefore, the MTI filter as the type of IIR is the same as that in the case of the MTI filter as the type of FIR. That is, as the number of pieces of the input data is larger, the blood flow at a lower velocity can be detected from the still organ with a preferable resolution.

Further, according to the color Doppler method, such an alternate scanning technology is devised that a long observation time is ensured with a small packet size by inserting the sending of the ultrasonic waves to another scanning line without continuously sending the ultrasonic waves to the same scanning line. Furthermore, with the alternate scanning technology, such a method is devised that the detection sensitivity of the blood flow at the above-mentioned low velocity is improved without reducing the frame rate.

However, according to the method using the alternate scanning technology, since the packet size is not large, it is not possible to increase the number of the power signals of the blood flow added to determine the presence/absence of the blood flow. Therefore, there is such a problem that the above-mentioned advantage to improve the S/N ratio cannot be obtained. In addition, there is such a problem to reduce a return velocity because the sending period of the ultrasonic waves in the same direction is long.

Then, such a method is devised to improve the S/N ratio by increasing the packet size without reducing the frame rate and to obtain the detection sensitivity of the blood flow at a low velocity. According to this method, the alternate scanning is performed every frame and data on different frames is used. Since data having an infinite length can be used, the MTI filter as the type of IIR can be advantageously used.

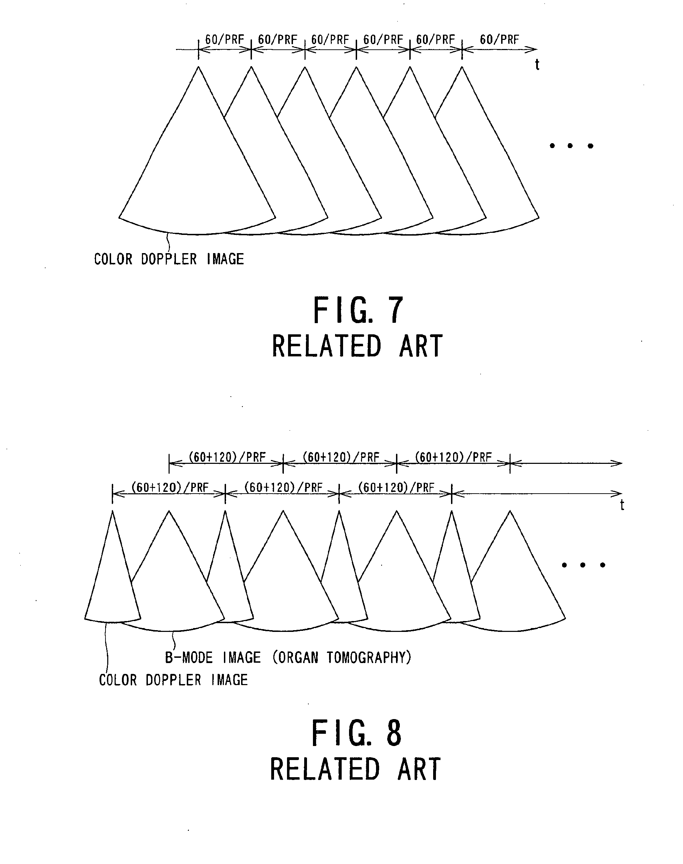

Fig. 7 is a diagram showing one example of the scanning method using the alternate scanning with a conventional ultrasonic diagnostic apparatus.

Referring to Fig. 7, the abscissa denotes time t. As shown in Fig. 7, the scanning is alternately performed to capture a color Doppler image (color Doppler image for blood flow) for the period of 60/PRF where "PRF" is a pulse repetition frequency and "60" is the number of rasters. In this case, the frame rate is $(60/PRF)^{-1}$.

Fig. 8 is a diagram showing another example of the scanning method using the alternate scanning with the conventional ultrasonic diagnostic apparatus.

Referring to Fig. 8, the abscissa denotes time t. As shown in Fig. 8, such a method is also devised for alternately performing the scanning for the color Doppler image and the scanning for a B-mode image (organ tomography) under different capturing conditions. That is, while alternately performing the scanning for the color Doppler image and the scanning for the B-mode image, both the scanning is iteratively executed for the period of (60+120)/PRF.

Since the best sending condition of the ultrasonic waves in the scanning for the B-mode image is different from the best sending condition of the ultrasonic waves in the scanning for the color Doppler image, it is realistic to differ the transmission of the ultrasonic waves for the B-mode image from the transmission of the ultrasonic waves for the color Doppler image as shown in Fig. 8.

Referring to Fig. 8, in the alternate scanning under conditions that the number of rasters for the B-mode image is "120" and the number of rasters for the color Doppler image is "60", if PRF is 6 kHz, a display period T of the color Doppler image and the B-mode image is 30 ms as shown in Equation (1).

$$T = (60+120)/PRF = 30 \text{ (ms)} \tag{1}$$

Further, a return velocity Vmax can be calculated with the display period T by using Equation (2).

$$Vmax = c/(4f_0T) \tag{2}$$

In Equation (2), "c" denotes a sound velocity and "$f_0$" denotes the central frequency of the ultrasonic signal received. Equation (2) shows that the return velocity is reduced and the velocity resolution of the blood flow is also reduced when the display period of the image is long. In Equation (2), if the sound velocity c is 1540 m/s and the central frequency $f_0$ of a sound wave signal is 2.5 MHz, the display period T is 30 ms and the return velocity Vmax is therefore 5 mm/s. If the return velocity is low as mentioned above, there is such a danger that it is not possible to identify and display the moving direction of the blood flow on the velocity display of the blood flow according to the usual color Doppler method.

Then, such a method is proposed to reduce the scanning period for the color Doppler image to "T" (= 60/PRF = 10 ms), increase a display frame rate of the color Doppler image by three times, and also increase the return velocity by three times.

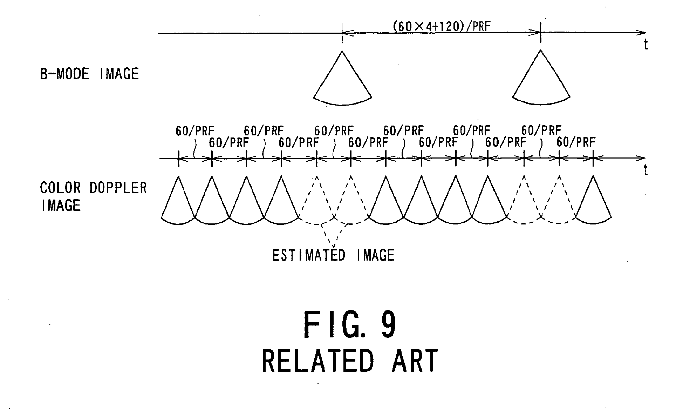

Fig. 9 is a diagram showing an example for reducing the scanning period for the color Doppler image in the alternate scanning using the conventional ultrasonic diagnostic apparatus.

Referring to Fig. 9, by increasing the scanning period for the B-mode image and reducing the scanning period for the color Doppler image, it is possible to increase the display frame rate of the color Doppler image and the return velocity. However, during the scanning for the B-mode image, Doppler signals for the color Doppler image are not collected. Therefore, as shown by dotted parts in Fig. 9, the Doppler signals for the color Doppler image are lost.

Then, in order to set the entire data string of the Doppler signals to be identical to the data string of the signals sampled at the equal time intervals, such a method is devised to obtain the lost Doppler signals by estimation from the Doppler signals before/after the lost Doppler signals and perform the MTI-filtering of the entire data string including the estimated Doppler signal.

Further, as a technology for another color-Doppler method, such a method is devised to perform the MTI-filtering of a sampled data string of the Doppler signals at unequal time intervals.

However, even with the conventional method for performing the MTI filtering of the data string of the Doppler signals at the equal time intervals obtained by the alternate scanning and estimation, upon detecting the blood flow at a lower velocity, the return velocity is not sufficient. Specifically, the return velocity in the alternate scanning using the above-mentioned estimation of the Doppler signal is determined depending on PRF and the number of sending scanning lines of the Doppler signals, i.e., 30 mm/s. Therefore, the return velocity is not substantially high to display the direction of the blood flow without the return.

SUMMARY OF THE INVENTION

The present invention has taken into consideration the above-described problems, and it is an object of the present invention to provide an ultrasonic diagnostic apparatus and an ultrasonic diagnostic method, an S/N ratio is improved while maintaining a frame rate, and a monitor is made to display a blood flow as a Doppler image because the blood flow of low speed is detected by using an increasing return velocity.

To solve the above-described problems, the present invention provides the ultrasonic diagnostic apparatus to mention it in claim 1, comprising: a scanning executing unit configured to execute a first scanning that is iteratively performed by a predetermined period so as to obtain a B-mode image of an object and to execute a second scanning that is iteratively performed a predetermined number of times by a first period between the first scanning so as to obtain a two-dimensional distribution of a blood flow information and that is iteratively performed by a second period while inserting the first scanning; a Doppler signal obtaining unit configured to sequentially obtain a Doppler signal from a reflection signal obtained by the second scanning; a storage unit configured to store, for each raster direction, a Doppler signal string at unequal time intervals collected for the first period and the second period by the Doppler signal obtaining unit; a removing unit configured to obtain a blood flow signal by reading the Doppler signal string at the unequal time intervals from the storage unit and to remove a signal component with a small motion; a blood flow information obtaining unit configured to obtain the blood flow information based on the blood flow signal; and a B-mode image generating unit configured to generate the B-mode image based on the reflection signal obtained by the first scanning.

To solve the above-described problems, the present invention provides the ultrasonic diagnostic method to mention it in claim 7, comprising steps of: executing for executing a first scanning that is iteratively performed by a predetermined period so as to obtain a B-mode image of an object and for executing a second scanning that is iteratively performed a predetermined number of times by a first period between the first scanning so as to obtain a two-dimensional distribution of a blood flow information and that is iteratively performed by a second period while inserting the first scanning; obtaining for sequentially obtaining a Doppler signal from a reflection signal obtained by the second scanning; storing for storing, for each raster direction, a Doppler signal string at unequal time intervals collected for the first period and the second period by the step of obtaining; removing for obtaining a blood flow signal by reading the Doppler signal string stored by the step of storing at the unequal time intervals and for removing a signal component with a small motion; obtaining for obtaining the blood flow information from the blood flow signal; and generating for generating the B-mode image based on the reflection signal obtained by the first scanning.

BRIEF DESCRIPTION OF THE DRAWINGS

In the accompanying drawings:

Fig. 1 is a block diagram showing a structure of an ultrasonic diagnostic apparatus according to an embodiment of the present invention;
Fig. 2 is a diagram one example of a scanning condition set by a control circuit shown in Fig. 1;
Fig. 3 is a diagram showing one example of a data string at one raster position, input to an MTI filter shown in Fig. 1;
Fig. 4 is a diagram showing one example of the data string at one raster position, input to the MTI filter shown in Fig. 1;
Fig. 5 is a diagram showing an example in which the number of pieces of data used for calculating blood flow information is larger than the number of pieces of the data input to the MTI filter shown in Fig. 1;
Fig. 6 is a diagram showing the other modification of the scanning condition set by the control circuit shown in Fig. 1;
Fig. 7 is a diagram showing one example of a scanning method using an alternate scanning with a conventional ultrasonic diagnostic apparatus;
Fig. 8 is a diagram showing another example of the scanning method using the alternate scanning with the conventional ultrasonic diagnostic apparatus; and
Fig. 9 is a diagram showing an example for reducing a scanning period for a color Doppler image in the alternate scanning using the conventional ultrasonic diagnostic apparatus.

DESCRIPTION OF THE PREFERRED EMBODIMENTS

Hereinbelow, a description will be given of an ultrasonic diagnostic apparatus and an ultrasonic diagnostic method according to an embodiment of the present invention with reference to the drawings.

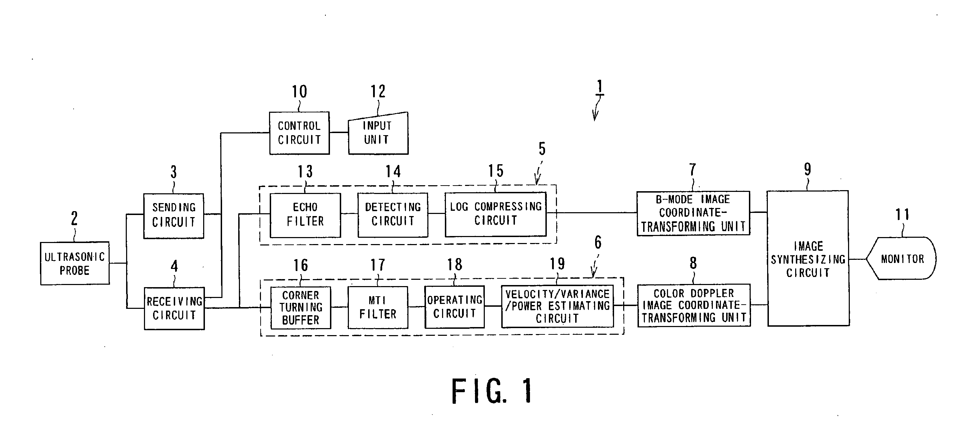

Fig. 1 is a block diagram showing the structure of the ultrasonic diagnostic apparatus according to the embodiment of the present invention.
An ultrasonic diagnostic apparatus 1 has an ultrasonic probe 2, a sending circuit 3, a receiving circuit 4, a B-mode processing system 5, a color Doppler processing system 6, a B-mode image coordinate-transforming unit 7, a color Doppler image coordinate-transforming unit 8, an image synthesizing circuit 9, a control circuit 10, a monitor 11, and an input unit 12.
The ultrasonic probe 2 has a plurality of piezoelectric vibrators containing ceramic in parallel at the end thereof. The piezoelectric vibrators of the ultrasonic probe 2 have a function for generating ultrasonic waves (ultrasounds) on the basis of a voltage pulse applied from the sending circuit 3 and further have a function for receiving an ultrasonic echo and converting the echo into an electrical signal.
The sending circuit 3 comprises a pulse generator, a sending delay circuit, and a pulsar (which are not shown), and is connected to the ultrasonic probe 2. The pulse generator in the sending circuit 3 has a function for iteratively generating a rate pulse. The rate pulses are distributed into the number of channels and are sent to the sending delay circuit. The sending delay circuit has a function for converging the ultrasonic waves like beams and sending the delay time necessary for determining the sending direction to the rate pulses. Triggers from a trigger signal generator (not shown) are supplied to the sending delay circuit as timing signals. The pulsar applies voltage pulses to the ultrasonic probe 2 every channel at the timing for receiving the rate pulse from the sending delay circuit. Thus, the ultrasonic beams can be sent to an object (patient).

The receiving circuit 4 has a function for receiving the ultrasonic echo from the piezoelectric vibrators in the ultrasonic probe 2, generating an IQ signal, and sending the generated IQ signal to the B-mode processing system 5 and the color Doppler processing system 6. Therefore, the receiving circuit 4 has a preamplifier, an analog to digital (A/D) converter, and a phasing and adding circuit (which are not shown). Further, the ultrasonic echo signals received from the piezoelectric vibrators are amplified by the preamplifier and the A/D converter thereafter A/D converts the amplified signals. Furthermore, the ultrasonic echo signals after the A/D conversion are phased and added by the phasing and adding circuit, thereby converting the ultrasonic echo signal into the IQ signal. Further, the IQ signal obtained by the phasing and adding circuit is output as an output of the receiving circuit 4.

The B-mode processing system 5 has an echo filter 13, a detecting circuit 14, and an LOG compressing circuit 15.

The echo filter 13 has a function for extracting only the IQ signal within a proper band by executing filtering processing of the IQ signal received from the receiving circuit 4 and a function for sending the IQ signal after the filtering processing to the detecting circuit 14.

The detecting circuit 14 has a function for detecting the IQ signal received from the echo filter 13 and obtaining a B-mode signal every scanning line forming a B-mode image and a function for sending the obtained B-mode signal to the LOG compressing circuit 15.

The LOG compressing circuit 15 has a function for performing compression processing of the B-mode signal received from the detecting circuit 14 with logarithm conversion and a function for sending the B-mode signal after the compressing processing to the B-mode image coordinate-transforming unit 7.

The color Doppler processing system 6 has a corner turning buffer (CTB) 16, an MTI filter 17, an operating circuit 18, and a velocity/variance/power estimating circuit 19.

The CTB 16 temporarily stores data strings on the time series of the Doppler signal input from the receiving circuit 4. The CTB 16 stores a plurality of pieces of data at raster positions to cover the number of pieces of data input to the MTI filter 17. The data string of the IQ signals stored in the CTB 16 is output to the MTI filter 17 in a predetermined order.

The MTI filter 17 has a function for removing the two-dimensional distribution of blood flow information, that is, clutter components and noise components which are unnecessary for generating the color Doppler image from the Doppler signals having a basic wave component and a harmonic component and extracting the Doppler signal from the blood flow and a function for sending the extracted Doppler signal as a blood flow signal to the operating circuit 18. Thus, the MTI filter 17 is formed to perform the filtering processing of the Doppler signal. In particular, when a plurality of Doppler signals serving as an input data string for the filtering processing are set at unequal time intervals, the MTI filter 17 executes the filtering processing for setting the difference between the original input data and the data obtained by performing fitting the input data string as the data string for outputting the blood flow signal.

The operating circuit 18 has a function for obtaining intermediate data necessary for operating the velocity, power, and variance of the blood flow from the data at equal time intervals, serving as components of the output data string received from the MTI filter 17 and a function for sending the obtained intermediate data to the velocity/variance/power estimating circuit 19.

The velocity/variance/power estimating circuit 19 has a function for calculating the velocity, power, and variance of the blood flow on the basis of the intermediate data received from the operating circuit 18 and a function for sending the velocity and power of the blood flow obtained by the calculation, as the data strings of a velocity signal and a power signal every scanning line to the color Doppler image coordinate-transforming unit 8.

The B-mode image coordinate-transforming unit 7 has a function for coordinate-transforming the data string of the B-mode signals every scanning line received from the LOG compressing circuit 15 into a data string on the Cartesian coordinate system and a function for sending the B-mode signal after the coordinate-transformation to the image synthesizing circuit 9.

The color Doppler image coordinate-transforming unit 8 has a function for coordinate-transforming the data strings of velocity signals and power signals of the blood flow every scanning line received from the velocity/variance/power estimating circuit 19 into the data strings on the Cartesian coordinate system and a function for sending the velocity signal and power signal of the blood flow after the coordinate-transformation to the image synthesizing circuit 9.

The image synthesizing circuit 9 has a function for determining signals used for an image displayed on the monitor 11 from among the B-mode signal input from the B-mode image coordinate-transforming unit 7 and the velocity signal and power signal of the blood flow input from the color Doppler image coordinate-transforming unit 8 and assigning predetermined color and luminance in accordance with the value of the determined signal so as to generate a B-mode image from a B-mode signal value, a velocity image from a velocity signal value, and a power image from a power signal value and a function for synthesizing a velocity image and/or power image to the generated B-mode image and outputting the resultant image to the monitor 11.

The control circuit 10 has a function for controlling the operation of the ultrasonic diagnostic apparatus 1 so as to perform the control operation by setting the scanning condition in accordance with information from the input unit 12 and by setting control signals to the sending circuit 3 and the receiving circuit 4 in accordance with the set scanning condition. Under the scanning condition set by the control circuit 10, the scanning for the B-mode image and the scanning for the color Doppler image are executed at different scanning intervals, that is, different pulse repetition periods.

In general, the number of scanning lines for the color Doppler image is set to be smaller than the number of scanning lines for the B-mode image. Thus, the time required for one-time scanning for the color Doppler image is shorter than the time required for one-time scanning for the B-mode image.

Further, in order to increase the display frame rate and the return velocity of the color Doppler image, the pulse repetition period for the color Doppler image is practically set to be shorter than the pulse repetition period for the B-mode image. Therefore, the scanning condition is set to iteratively execute the scanning for the color Doppler image plural times between the scanning for the B-mode image.

However, theoretically, the scanning condition can be set to alternately perform the scanning for the B-mode image and the scanning for the color Doppler image at arbitrary times (including one time). Herein, a description will be given of the case of iteratively executing the scanning for the B-mode image and the scanning for the color Doppler image plural times.

Further, the scanning for the color Doppler image includes the case of executing this scanning subsequent to the scanning for the B-mode image and the case of executing this scanning subsequent to the scanning for the color Doppler image. Therefore, the scanning for the color Doppler image is executed at unequal time intervals. Specifically, the scanning for the color Doppler image is iteratively executed for two different pulse repetition periods.

Next, a description will be given of the operation of the ultrasonic diagnostic apparatus 1.

First, the control circuit 10 sets the scanning condition on the basis of the information from the input unit 12.

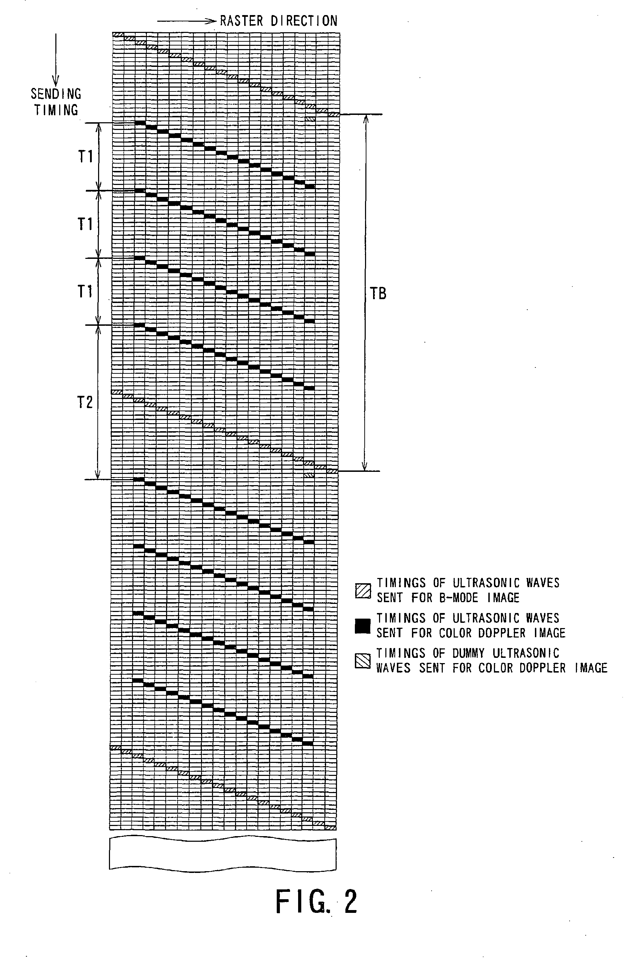

Fig. 2 is a diagram one example of the scanning condition set by the control circuit 10 shown in Fig. 1.

Referring to Fig. 2, the abscissa denotes the raster direction and the ordinate denotes the sending timing. Further, as shown in Fig. 2, shaded portions by using rising diagonal lines from bottom left to top right denote the timings of ultrasonic waves sent for the B-mode image, black portions denote the timings of ultrasonic waves sent for the color Doppler image, and shaded portions by using falling diagonal lines from top left to bottom right denote the timings of dummy ultrasonic waves sent for the color Doppler image. The scanning condition set by the control circuit 10 is as follows.

First, the entire region of the B-mode image is scanned one-time. Therefore, as shown in Fig. 2, the ultrasonic waves for the B-mode image are continuously sent in all raster directions (scanning lines). Fig. 2 shows one example of sending the ultrasonic waves in different raster directions 20 times.

Next, the dummy ultrasonic waves for the color Doppler image are sent. As shown in Fig. 2, the dummy ultrasonic waves are sent one-time.

Subsequently, the scanning for the color Doppler image is performed throughout the entire region. Therefore, as shown in Fig. 2, the ultrasonic waves for the color Doppler image are sequentially sent in all raster directions (scanning lines). Further, the ultrasonic waves for the color Doppler image are sent again in all raster directions. The above-mentioned transmission of the ultrasonic waves for the color Doppler image in all raster directions is executed for a period T1 iteratively arbitrary time. Fig. 2 shows the example for executing, iteratively three times, the 16-time transmission of the ultrasonic waves for the color Doppler image for the period T1.

Incidentally, the above-mentioned dummy ultrasonic waves are set to prevent the emphasis of the ultrasonic echo caused by the scanning for the B-mode image in the MTI filter, upon shifting the scanning for the B-mode image to the scanning for the color Doppler image.

The above-mentioned scanning for the B-mode image and scanning for the color Doppler image plural times are iteratively executed. Therefore, the repetition period of the scanning for the B-mode image, that is, a display frame rate TB for the B-mode image has a value depending on the number of scanning times for the color Doppler mode and the number of scanning lines for the B-mode image. Further, an repetition period T2 of the scanning for the color Doppler image performed by inserting and performing the scanning for the B-mode image is set to be longer than the repetition period T1 of the scanning for the color Doppler image executed continuously to the scanning for the color Doppler image by the time necessary for the scanning for the B-mode image and the transmission of the dummy ultrasonic waves.

In particular, by setting the repetition periods T1 and T2 of the scanning for the color Doppler mode to be shorter than the repetition period of the scanning for the B-mode image, an updating frame rate of the color Doppler mode image can be higher than a display frame rate TB (frame rate for updating the image) for the B-mode image. That is, for the purpose of observing the prompt inverse flood, the frame rate for updating the color Doppler mode image that requires being faster than the frame rate for updating the B-mode image, the frame rate for updating the color Doppler mode image can be set to be higher.

In order to execute the scanning under the above-set scanning condition, the control circuit 10 sends control signals to the sending circuit 3, the receiving circuit 4, and another necessary device, thereby controlling the operation of the ultrasonic diagnostic apparatus 1. Therefore, the sending circuit 3 sends a rate pulse to the delay time necessary for iteratively generating the rate pulses and converging ultrasonic beams in the directions of the scanning lines. The rate pulse is sent to the pulsar in the sending circuit 3. Further, at the timing for receiving the rate pulse, voltage pulses are applied to the piezoelectric vibrators in the ultrasonic probe 2 from the pulsar. Thus, the ultrasonic waves for the B-mode image and the ultrasonic waves or the color Doppler image are intermittently sent from the ultrasonic probe 2 every scanning line under the scanning condition.

Then, in the object, the ultrasonic echo is generated and is received by the piezoelectric vibrators in the ultrasonic probe 2. In the piezoelectric vibrators, the ultrasonic echo is converted into an electrical signal and is sent to the receiving circuit 4 as the ultrasonic echo signal. The receiving circuit 4 amplifies, A/D converts, and phases and adds the ultrasonic echo signal, and the ultrasonic echo signal is converted into the IQ signal. Further, the IQ signals are output from the receiving circuit 4 to the B-mode processing system 5 and the color Doppler processing system 6.

In the B-mode processing system 5, the echo filter 13 extracts the IQ signal within the proper band through the filtering processing of the IQ signal. The IQ signal after the filtering processing is sent and detected by the detecting circuit 14, and the B-mode signal is obtained. The B-mode signal is sent to the LOG compressing circuit 15, and the B-mode signal is subjected to compressing processing with logarithm conversion. The B-mode signal after the compressing processing is sent to the B-mode image coordinate-transforming unit 7.

The B-mode image coordinate-transforming unit 7 coordinate-transforms the data string of the B-mode signal every scanning line into the data string on the Cartesian coordinate system, and the B-mode signal after the coordinate transformation is sent to the image synthesizing circuit 9.

On the other hand, the color Doppler processing system 6 sequentially stores the Doppler signal obtained as the IQ signal to the CTB 16 from the receiving circuit 4. The CTB 16 stores the data at the raster positions covering the number of input data necessary for the MTI filter 17. Herein, the number of the repetition periods of the scanning for the color Doppler image is two of T1 and T2. Thus, when the CTB 16 stores the number of pieces of the data over the number of times of the scanning for the color Doppler image continuously executed, the data is stored in the CTB 16 at unequal time intervals. For example, under the scanning condition shown in Fig. 2, the scanning for the color Doppler image is continuously executed four times. Therefore, upon storing at least 5 pieces of the data at the raster position in the CTB 16, the data is at the unequal time intervals.

The number of pieces of the input data to the MTI filter 17 is practically over the number of times of the scanning for the color Doppler image continuously executed. Therefore, the CTB 16 stores the data string of the Doppler signals at the unequal time intervals at the raster positions necessary for covering the number of pieces of the input data to MTI filter 17. Thus, the CTB 16 can store the data with an infinite length as the maximum level, and the data with the infinite length as the maximum level can be used as the input data to MTI filter 17.

When the predetermined number of pieces of the data is stored in the CTB 16, the data string comprising the determined number of pieces of the data is input to the MTI filter 17.

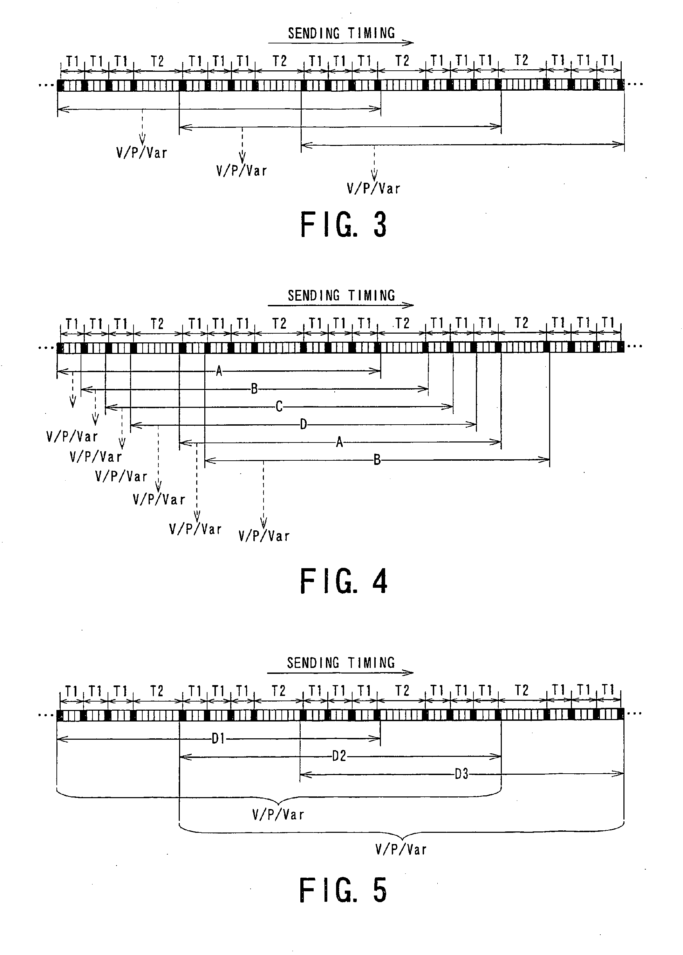

Fig. 3 is a diagram showing one example of the data string at one raster position, input to the MTI filter 17 shown in Fig. 1.

Referring to Fig. 3, the abscissa denotes the receiving and sending timing of the ultrasonic waves and the black portion denotes the ultrasonic waves to be sent. In the scanning obtained by inserting the scanning for the B-mode image between the plural-time scanning for the color Doppler image as shown in Fig. 2, the receiving and sending timings for the ultrasonic waves for the color Doppler image are not at equal time intervals. The data string for the color Doppler image input to the MTI filter 17 is not the data string obtained by the equal-time-interval sampling.

Further, in the scanning shown in Fig. 2, after sampling four pieces of data for the repetition period T1, the next data is sampled for the repetition period T2 as shown in Fig. 3. Further, the data is sampled for the above-mentioned different repetition periods T1 and T2.

The above-mentioned data strings at the unequal time intervals are stored in the CTB 16. However, an arbitrary number of pieces of the data string can be input to the MTI filter 17. For example, upon setting 12 pieces of the data string as the input data to the MTI filter 17, the data string within a range shown by a solid arrow in Fig. 3 corresponds to the one-time input data to the MTI filter 17. In this case, the time difference between the adjacent data of the data string input to the MTI filter 17 is [T1, T1, T1, T2, T1, T1, T1, T2, T1, T1, T1].

Further, in the MTI filter 17, the above-mentioned input data at the unequal time intervals is subjected to MTI filter processing shown in Equation (3).

$$y = Wx \hspace{4cm} (3)$$

In Equation (3), "y" denotes an output string vector of the MTI filter 17, "x" denotes an input data string vector of the MTI filter 17, and "W" denotes a filter matrix of the MTI filter 17. Further, it is assumed that the data strings (Doppler signals) at unequal time intervals serving as the input data string vector are subjected to polynomial approximation and a result of subtracting the signal after the polynomial approximation from the original signal before the polynomial approximation corresponds to the output string vector indicating the blood flow signal. The filter matrix W of the MTI filter 17 can be obtained by Equation (4-1) and Equation (4-2) with a matrix "A".

$$A = \begin{pmatrix} 0^0 & 0^1 & 0^2 \\ (T_1)^0 & (T_1)^1 & (T_1)^2 \\ (2T_1)^0 & (2T_1)^1 & (2T_1)^2 \\ (3T_1)^0 & (3T_1)^1 & (3T_1)^2 \\ (3T_1+T_2)^0 & (3T_1+T_2)^1 & (3T_1+T_2)^2 \\ (4T_1+T_2)^0 & (4T_1+T_2)^1 & (4T_1+T_2)^2 \\ (5T_1+T_2)^0 & (5T_1+T_2)^1 & (5T_1+T_2)^2 \\ (6T_1+T_2)^0 & (6T_1+T_2)^1 & (6T_1+T_2)^2 \\ (6T_1+2T_2)^0 & (6T_1+2T_2)^1 & (6T_1+2T_2)^2 \\ (7T_1+2T_2)^0 & (7T_1+2T_2)^1 & (7T_1+2T_2)^2 \\ (8T_1+2T_2)^0 & (8T_1+2T_2)^1 & (8T_1+2T_2)^2 \\ (9T_1+2T_2)^0 & (9T_1+2T_2)^1 & (9T_1+2T_2)^2 \end{pmatrix} \qquad (4-1)$$

$$W = I - A(A^T A)^{-1} A^T \qquad (4-2)$$

Herein, let "I" be the unit matrix, let "T" be the transposed matrix, and let "-1" be the inverse matrix. Further, Equation (4-1) and Equation (4-2) are expresses in the case of approximating (fitting) an input data string vector with the method of least squares using a quadratic polynomial. That is, the matrix A is defined as Equation (4-1) and the filter matrix W of the MTI filter 17 then can be calculated by Equation (4-2).

The output string vector of the blood flow signal obtained by performing the filtering processing with the filter matrix W is sent to the operating circuit 18.

Herein, an output string vector y of the MTI filter 17 is expressed as Equation (5-1). In this case, the operating circuit 18 performs calculation of Equation (5-2).

$$y = [y1, y2, y3, y4, y5, y6, y7, y8, y9, y10, y11, y12]^T \qquad (5-1)$$

$$ac = \frac{1}{M} \sum_i y_i^* y_{i+1} \quad (i=1,2,3,5,6,7,9,10,11 \quad M=9) \qquad (5-2)$$

That is, the operating circuit 18 obtains intermediate data ac necessary for calculating the velocity, power, and variance of the blood flow with Equation (5-2) by using only M pieces of data having an adjacent time difference T1 among elements of the output string vector y of the MTI filter 17. Although all the data having the adjacent time different T1 is used for calculation of the intermediate data ac in Equation (5-2), a part of the data may be used to calculate the intermediate data ac. Since the data at the end can have a large error, the calculation precision of the intermediate data ac can be improved by using only central data for the calculation of the intermediate data ac with Equation (5-2) where i = 5, 6, and 7.

Subsequently, the operating circuit 18 sends the obtained intermediate data ac to the velocity/variance/power estimating circuit 19. Then, the velocity/variance/power estimating circuit 19 individually calculates, on the basis of the intermediate data ac, a velocity V of the blood flow, power P of the blood flow, and variance Var of the blood flow with Equation (6-1), Equation (6-2), and Equation (6-3).

$$V = \mathtt{atan2}\ (\mathrm{imag(ac)},\ \mathrm{real(ac)}) \qquad\qquad (6\text{-}1)$$

$$P = \frac{1}{N}\sum_i y_i^* y_i \qquad (\mathrm{i}{=}1\sim 12 \quad N{=}12) \qquad\qquad (6\text{-}2)$$

$$Var = 1 - \frac{|ac|}{P} \qquad\qquad\qquad (6\text{-}3)$$

The velocity of the blood flow obtained with Equation (6-1) is a normalized velocity having a value ranging from -π to +π. The actual return velocity has a value obtained by substituting the receiving and sending period T1 of the ultrasonic waves for the color Doppler image for the display period T in Equation (2). That is, although there are two receiving and sending periods T1 and T2 of the ultrasonic waves for the color Doppler image, only the data on a pulse pair for the period T1 is used in Equation (5-2) for obtaining the intermediate data ac necessary for calculating the velocity, power, and variance of the blood flow. Accordingly, the return velocity of the blood flow can be determined by the receiving and sending period T1.

Fig. 3 shows, with dotted arrows, a relationship between the receiving and sending timing of the ultrasonic waves for obtaining the data used for the calculation and the velocity V, power P, and variance Var of the blood flow which are sequentially calculated by the velocity/variance/power estimating circuit 19. That is, the velocity V, power P, and variance Var of the blood flow are obtained from data within ranges shown by solid arrows, serving as one set of the input data string to the MTI filter 17. Therefore, with the scanning shown in Fig. 2, it is possible to output blood flow information including the velocity V, power P, and variance Var of the blood flow for the same period as the display frame period of the B-mode image.

The velocity/variance/power estimating circuit 19 sends, to the color Doppler image coordinate-transforming unit 8, the velocity and power of the blood flow obtained by the calculation as data strings of the velocity signal and power signal every scanning line. The color Doppler image coordinate-transforming unit 8 coordinate-transforms the data strings of the velocity signal and power signal of the blood flow every scanning line, received from the velocity/variance/power estimating circuit 19, into the data strings on the Cartesian coordinate system, and sends the transformed data strings to the image synthesizing circuit 9.

The image synthesizing circuit 9 determines the signal used for the image displayed on the monitor 11 from among the B-mode signal and the velocity signal and power signal of the blood flow input from the B-mode image coordinate-transforming unit 7 and the color Doppler image coordinate-transforming unit 8, and assigns predetermined color and luminance in accordance with the value of the determined signal, thereby respectively generating the B-mode image, velocity image, and power image from the B-mode signal value, velocity signal value, and power signal value. Subsequently, the image synthesizing circuit 9 synthesizes the velocity image and/or power image to the generated B-mode image, thereby generating one synthesis image. Further, the image synthesizing circuit 9 sends the generated synthesis image to the monitor 11. Accordingly, the monitor 11 displays the synthesis image obtained by superimposing the velocity image and/or power image to the B-mode image.

That is, the above-mentioned ultrasonic diagnostic apparatus 1 improves the performance of the MTI filter 17 and the S/N ratio by performing the scanning for the color Doppler image while inserting the scanning for the B-mode image between the scanning for the color Doppler image and by using the data for the color Doppler image through the frames, when differing the sending condition of the ultrasonic waves for the B-mode image from the sending condition of the ultrasonic waves for the color Doppler image. Further, although the data strings for the color Doppler image are collected while inserting and performing the scanning for the B-mode image and are not therefore at equal time intervals, the MTI filter 17 using the approximation including a polynomial fitting processing for the data through the frames is employed.

Therefore, the ultrasonic diagnostic apparatus 1 enables the use of the Doppler data with the infinite length at the maximum level as the input data string of the MTI filter 17 without reducing the display frame rate. Therefore, the signal component with small motion from the organ is suppressed, thereby detecting the blood flow at the low velocity from the still organ with a preferable resolution.

In addition, since it is possible to increase the number of pieces of the data used for estimating the blood flow information including the velocity, variance, and power of the blood flow to the infinite length at the maximum level, the S/N ratio can be improved. Moreover, only the data collected for the short period T1 is used for estimating the blood flow information, the reduction in return velocity can be suppressed.

For the conventional ultrasonic diagnostic apparatus, similarly, such a scanning condition is devised to perform the scanning for the color Doppler image plural times by inserting the scanning for the B-mode image between the scanning for the color Doppler image. However, in the case of the conventional ultrasonic diagnostic apparatus, it is assumed that the data obtained by the scanning for the color Doppler image is at equal time intervals and the data lost by the scanning for the B-mode image is estimated. Therefore, the conventional ultrasonic diagnostic apparatus has constraints that the scanning time of the data for the B-mode image needs to be integral times of the scanning time for the color Doppler image.

On the other hand, the ultrasonic diagnostic apparatus 1 shown in Fig. 1 does not use the data estimation and the estimation processing is not thus required and the amount of processing can be reduced. Further, since the data strings at unequal time intervals are used as the input data strings of the MTI filter 17, the scanning time of the data for the B-mode image does not have constrains.

Furthermore, with the conventional ultrasonic diagnostic apparatus, the number of pieces of the data in the packet ranges 4 to 16, this data is sampled at equal time intervals, and the sampled data is subjected to the filtering processing of the MTI filter in the packet, thereby finally obtaining the blood flow information on one set of the velocity, power, and variance per packet.

On the other hand, the ultrasonic diagnostic apparatus 1 shown in Fig. 1 does not use the concept of the packet and can use the data with the infinite length at the maximum level as the input data string of the MTI filter 17.

Next, a description will be given of modifications of the input data string to the MTI filter 17.

Fig. 4 is a diagram showing another example of the data string at one raster position, input to the MTI filter 17 shown in Fig. 1.

Referring to Fig. 4, the abscissa denotes the receiving and sending timing of the ultrasonic waves and the black portions denote the sent ultrasonic waves. As shown in Fig. 4, the data string input to the MTI filter 17 can be arbitrarily set. The number of pieces of the input data string shown in Fig. 4 is the same as the number of pieces of the input data string shown in Fig. 3 and the data string shown in Fig. 4 however has an input period different from that of the data string input to the MTI filter 17. That is, the data string shown in Fig. 3 is input to the MTI filter 17 every collection of four pieces of the data. However, the data string shown in Fig. 4 is input to the MTI filter 17 every collection of one piece of the data.

By inputting the data string for the period shown in Fig. 4 to the MTI filter 17, four data strings A, B, C, and D are input to the MTI filter 17 during displaying the B-mode image corresponding to one frame. Therefore, the blood flow information corresponding to four frames can be output.

Figs. 3 and 4 show an example in which 12 data strings is subjected to the filtering processing of the MTI filter 17 and the blood flow information such as the velocity, power, and variance of the blood flow is calculated from the output data string of the MTI filter 17. Further, it is possible to infinitely increase the number of pieces of the data subjected to the filtering processing of the MTI filter 17 and the number of pieces of the data used for calculating the blood flow information.

Incidentally, the number of pieces of the data input to the MTI filter 17 has a constraint of the size of the filter matrix W and therefore needs to be within the executing range of hardware or software. However, the number of pieces of the data input to the MTI filter 17 may not be the same as the number of pieces of the data used for calculating the blood flow information. Thus, the blood flow information may be calculated by using the number of pieces of the data larger than the number of pieces of the data input to the MTI filter 17.

Fig. 5 is a diagram showing an example in which the number of pieces of the data used for calculating the blood flow information is larger than the number of pieces of the data input to the MTI filter 17 shown in Fig. 1.

Referring to Fig. 5, the abscissa denotes the receiving and sending timing of the ultrasonic waves and the black portion denotes the ultrasonic waves to be sent. In the example shown in Fig. 5, the number of pieces of the data input to the MTI filter 17 is 12 and the data string thus has 12 pieces of the data serving as the data string output to the MTI filter 17. Further, 24 pieces of the data output from the MTI filter 17 is used for calculating the blood flow information. That is, by using both an output data string D1 comprising 12 pieces of the data of the MTI filter 17 and an output data string D2 comprising 12 pieces of the data partly including the common data to the data string D1 of the MTI filter 17, it is possible to estimate the blood flow information such as the velocity, power, and variance of the blood flow from the data string comprising 24 pieces of the data.

As mentioned above, the number of pieces of the data used for estimating the blood flow information has no constraints. Further, the blood flow information can be estimated by operating the data having an infinite length with an IIR filter for performing weighted addition as shown in Equations (7-1), (7-2), and (7-3).

$$ac2(n) = (1-\beta)ac(n) + \beta \cdot ac2(n-1) \qquad (7\text{-}1) ,$$

$$\text{V2(n) = atan2 (imag(ac2(n)), real(ac2(n)))} \qquad (7\text{-}2)$$

$$P2(n) = (1-\beta)P(n) + \beta \cdot P2(n-1) \qquad (7\text{-}3)$$

Let "ac(n)" be the value of the n-th intermediate data ac obtained by Equation (5-2) and let "P(n)" be the n-th power of the blood flow obtained by Equation (6-2). Further, intermediate data ac2(n) and power P2(n) of the blood flow serving as indexes of the blood flow information can be obtained from the past intermediate data ac2(n-1) and power P2(n-1) of the blood flow by the weighted addition of the intermediate data ac and the power P(n) of the blood flow with a weighted coefficient β as shown in Equations (7-1) and (7-3). Furthermore, a velocity V2(n) of the blood flow can be obtained from the intermediate data ac2(n) as shown by Equation (7-2).

The weighted addition processing of the velocity information on the blood flow can lose pulsating information of the blood flow. However, the power information of the blood flow has a threshold, and the resultant information is used only for determining whether or not there is the blood flow and is not used for actually drawing the color Doppler image in many cases. Therefore, the data having an infinite length is used for the power information of the blood flow with Equation (7-3), thereby improving the S/N ratio.

Next, a description will be given of another modification of the scanning condition set by the control circuit 10.

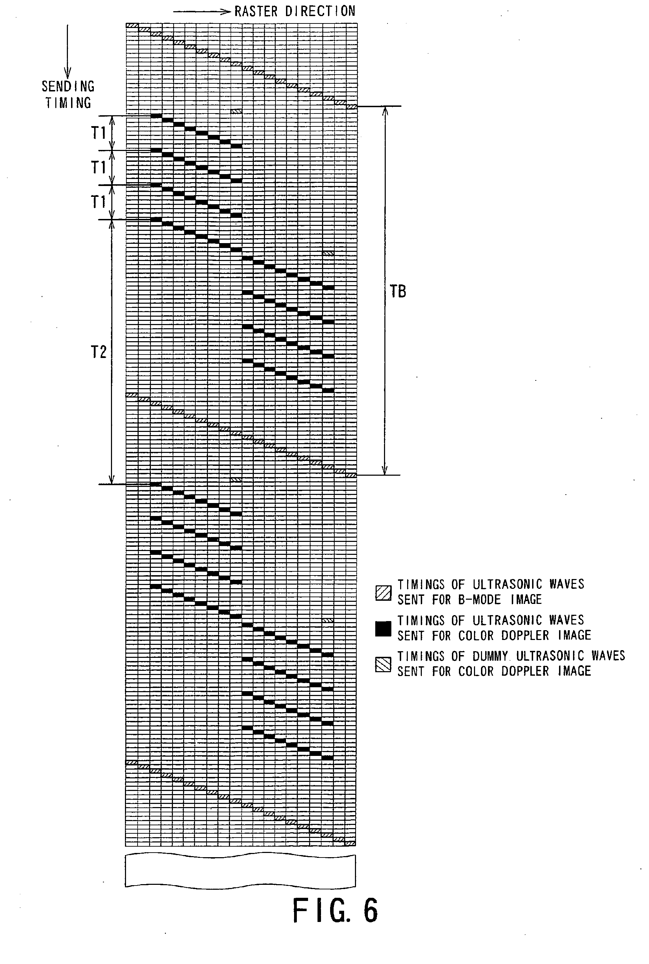

Fig. 6 is a diagram showing the other modification of the scanning condition set by the control circuit 10 shown in Fig. 1.

Referring to Fig. 6, the abscissa denotes the raster direction and the ordinate denotes the sending timing. Further, as shown in Fig. 6, shaded portions by using rising diagonal lines from bottom left to top right denote the timings of ultrasonic waves sent for the B-mode image, black portions denote the timings of ultrasonic waves sent for the color Doppler image, and shaded portions by using falling diagonal lines from top left to bottom right denote the timings of dummy ultrasonic waves sent for the color Doppler image.

As shown in Fig. 6, the scanning condition can be set so that the range of the scanning for the color Doppler image continuously executed between the scanning for the B-mode image is set as a part of the rasters and the entire region is scanned by plural-divided scanning obtained by shifting the raster positions. In the example shown in Fig. 6, the continuous scanning range for the color Doppler image is divided into raster blocks having two different rasters. During the scanning for the B-mode image, the scanning for the color Doppler image in eight raster directions belonging to the first raster block is performed four times by individual time shift of the sending timing T1. After that, the scanning for the color Doppler image in the remaining eight raster directions belonging to the second raster block is performed four times by individual time shift of the sending timing T1. Further, in the case of changing the raster block and performing the scanning for the color Doppler image, the dummy ultrasonic waves are first sent.

As shown in Fig. 6, such a scanning condition is set that the ultrasonic waves are not continuously sent in all raster directions in the scanning for the color Doppler image but the ultrasonic waves are continuously sent in a part of raster directions plural times and the ultrasonic waves are thereafter continuously sent in a part of the remaining raster directions plural times. Accordingly, the scanning period T1 for the color Doppler image performed between the scanning for the B-mode image can be reduced. In the example shown in Fig. 6, the scanning period T1 for the color Doppler image performed between the scanning for the B-mode image is half of the period T1 shown in Fig. 2. In stead of this, the period T2 of the scanning for the color Doppler image performed by inserting and performing the scanning for the B-mode image is set to be longer than the period T2 shown in Fig. 2.

Even upon obtaining the data for the color Doppler image as a result of the scanning for a plurality of divided raster blocks shown in Fig. 6, the data is subjected to the filtering processing of the MTI filter 17 with Equations (3), (4-1), (4-2), (5-1), (5-2), (6-1), (6-2), and (6-3). Thereafter, it is possible to estimate the blood flow information including the velocity V and power P of the blood flow. On the other hand, the return velocity is determined depending on the period T1 without depending on the period T2. Therefore, the period T1 is reduced, thereby increasing the return velocity. That is, the return velocity under the scanning condition shown in Fig. 6 is improved to be double of the return velocity under the scanning condition shown in Fig. 2.

According to the ultrasonic diagnostic apparatus 1 and the ultrasonic diagnostic method according to the embodiment, the S/N ratio is improved while maintaining the frame rate, and the monitor 11 can be made to display the blood flow as the Doppler image because the blood flow of low speed is detected by using the increasing return velocity.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1.   An ultrasonic diagnostic apparatus comprising:

a scanning executing unit configured to execute a first scanning that is iteratively performed by a predetermined period so as to obtain a B-mode image of an object and to execute a second scanning that is iteratively performed a predetermined number of times by a first period between the first scanning so as to obtain a two-dimensional distribution of a blood flow information and that is iteratively performed by a second period while inserting the first scanning;
a Doppler signal obtaining unit configured to sequentially obtain a Doppler signal from a reflection signal obtained by the second scanning;
a storage unit configured to store, for each raster direction, a Doppler signal string at unequal time intervals collected for the first period and the second period by the Doppler signal obtaining unit;
a removing unit configured to obtain a blood flow signal by reading the Doppler signal string at the unequal time intervals from the storage unit and to remove a signal component with a small motion;
a blood flow information obtaining unit configured to obtain the blood flow information based on the blood flow signal; and
a B-mode image generating unit configured to generate the B-mode image based on the reflection signal obtained by the first scanning.

2.   An ultrasonic diagnostic apparatus according to Claim 1, wherein the scanning executing unit obtains the two-dimensional distribution of the blood flow information for one frame successively by transmitting an ultrasonic wave while changing a raster in the second scanning sequentially.

3.   An ultrasonic diagnostic apparatus according to Claim 1 or 2, wherein after the scanning executing unit iteratively executes the second scanning that irradiates an ultrasonic wave while changing some raster sequentially, and executes the second scanning that irradiates the ultrasonic wave while changing another raster to iteratively perform the predetermined number of times successively by the first period.

4.   An ultrasonic diagnostic apparatus according to any of Claims 1 to 3, wherein the removing unit removes the signal component with the small motion by giving a polynomial fitting processing for the Doppler signal string at unequal time intervals.

5.   An ultrasonic diagnostic apparatus according to any of Claims 1 to 4, further comprising an operating unit configured to operate intermediate data for obtaining a power of the blood flow and the two-dimensional distribution of the blood flow information based on the blood flow signal, and a filtering unit configured to give a filtering processing for the power of the blood flow and the intermediate data operated by the operating unit by using data till an infinite length at the maximum level.

6.   An ultrasonic diagnostic apparatus according to any of Claims 1 to 5, wherein the scanning executing unit executes the second scanning for the first period and the second period that are shorter than the predetermined period for executing the first scanning that is set so that a frame rate for updating an image of the two-dimensional distribution of the blood flow information becomes faster than a frame rate for updating the B-mode image.

7.   An ultrasonic diagnostic method comprising steps of:

executing for executing a first scanning that is iteratively performed by a predetermined period so as to obtain a B-mode image of an object and for executing a second scanning that is iteratively performed a predetermined number of times by a first period between the first scanning so as to obtain a two-dimensional distribution of a blood flow information and that is iteratively performed by a second period while inserting the first scanning;

obtaining for sequentially obtaining a Doppler signal from a reflection signal obtained by the second scanning; storing for storing, for each raster direction, a Doppler signal string at unequal time intervals collected for the first period and the second period by the step of obtaining; removing for obtaining a blood flow signal by reading the Doppler signal string stored by the step of storing at the unequal time intervals and for removing a signal component with a small motion; obtaining for obtaining the blood flow information from the blood flow signal; and generating for generating the B-mode image based on the reflection signal obtained by the first scanning.

8. An ultrasonic diagnostic method according to Claim 7, wherein the step of executing obtains the two-dimensional distribution of the blood flow information for one frame successively by transmitting an ultrasonic wave while changing a raster in the second scanning sequentially.

9. An ultrasonic diagnostic method according to Claim 7 or 8, wherein after the step of executing iteratively executes the second scanning that irradiates an ultrasonic wave while changing some raster sequentially, and executes the second scanning that irradiates the ultrasonic wave while changing another raster to iteratively perform the predetermined number of times successively by the first period.

10. An ultrasonic diagnostic method according to any of Claims 7 to 9, wherein the step of removing removes the signal component with the small motion by giving a polynomial fitting processing for the Doppler signal string at unequal time intervals.

11. An ultrasonic diagnostic method according to any of Claims 7 to 10, further comprising a step of operating for operating intermediate data for obtaining a power of the blood flow and the two-dimensional distribution of the blood flow information based on the blood flow signal, and a step of filtering for giving a filtering processing for the power of the blood flow and the intermediate data operated by the step of operating by using data till an infinite length at the maximum level.

12. An ultrasonic diagnostic method according to any of Claims 7 to 11, wherein the step of executing executes the second scanning for the first period and the second period that are shouter than the predetermined period for executing the first scanning that is set so that a frame rate for updating an image of the two-dimensional distribution of the blood flow information becomes faster than a frame rate for updating the B-mode image.

FIG. 1

FIG. 2

SENDING TIMING

T1 T1 T1 T2 T1 T1 T1 T2 T1 T1 T1 T2 T1 T1 T1 T2 T1 T1 T1

V/P/Var

V/P/Var

V/P/Var

FIG. 3

SENDING TIMING

T1 T1 T1 T2 T1 T1 T1 T2 T1 T1 T1 T2 T1 T1 T1 T2 T1 T1 T1

A

B

C

D

A

B

V/P/Var

V/P/Var

V/P/Var

V/P/Var

V/P/Var V/P/Var

FIG. 4

SENDING TIMING

T1 T1 T1 T2 T1 T1 T1 T2 T1 T1 T1 T2 T1 T1 T1 T2 T1 T1 T1

D1

D2

D3

V/P/Var

V/P/Var

FIG. 5

FIG. 6

COLOR DOPPLER IMAGE

## FIG. 7
## RELATED ART

B-MODE IMAGE (ORGAN TOMOGRAPHY)
COLOR DOPPLER IMAGE

## FIG. 8
## RELATED ART

$(60 \times 4 + 120)/\text{PRF}$

B-MODE IMAGE

COLOR DOPPLER IMAGE

60/PRF  60/PRF  60/PRF  60/PRF  60/PRF  60/PRF
60/PRF  60/PRF  60/PRF  60/PRF  60/PRF  60/PRF

ESTIMATED IMAGE

# FIG. 9
## RELATED ART